(19) **Europäisches Patentamt**
**European Patent Office**
**Office européen des brevets**

(11) **EP 1 695 892 B1**

(12) **EUROPÄISCHE PATENTSCHRIFT**

(45) Veröffentlichungstag und Bekanntmachung des Hinweises auf die Patenterteilung:
**14.10.2009 Patentblatt 2009/42**

(51) Int Cl.:
***B62D 5/083*** *(2006.01)*   ***B62D 15/02*** *(2006.01)*

(21) Anmeldenummer: **06003372.7**

(22) Anmeldetag: **20.02.2006**

(54) **Aktive Hydrauliklenkung mit verringertem Überwachungsaufwand**

Active hydraulic steering with reduced monitoring complexity

Direction hydraulique active à surveillance simplifiée

(84) Benannte Vertragsstaaten:
**DE FR GB SE**

(30) Priorität: **25.02.2005 DE 102005009258**

(43) Veröffentlichungstag der Anmeldung:
**30.08.2006 Patentblatt 2006/35**

(73) Patentinhaber: **ThyssenKrupp Presta SteerTec GmbH**
**40476 Düsseldorf (DE)**

(72) Erfinder:
• **Vohmann, Martin**
**71272 Renningen (DE)**
• **Rombold, Manfred**
**71364 Winnenden-Höfen (DE)**

• **Rachel, Rüdiger**
**73650 Winterbach (DE)**
• **Frei, Thomas**
**73525 Schwäbisch Gmünd (DE)**
• **Schiek, Bernd**
**73650 Winterbach (DE)**

(74) Vertreter: **Lenzing, Andreas**
**Lenzing Gerber**
**Patentanwälte**
**Bahnstrasse 9**
**40212 Düsseldorf (DE)**

(56) Entgegenhaltungen:
**DE-A1- 2 412 548     DE-B3- 10 254 688**
**DE-C1- 4 242 441     DE-C1- 19 616 439**
**JP-A- 9 254 801      JP-A- 10 167 105**

EP 1 695 892 B1

**Beschreibung**

Die vorliegende Erfindung betrifft eine hydraulische Servolenkung für Kraftfahrzeuge mit den Merkmalen des Oberbegriffs des Anspruchs 1.

Unter einer aktiven Hydrauliklenkung versteht man eine Servolenkung, die durch Eingriffe einer elektronischen Steuerung selbstständig Lenkbewegungen ausführen kann. Hierbei wird der hydraulische Servomotor, der ein doppelt wirkendes Kolben/Zylinderaggregat ist, durch Ventile gezielt mit Hydraulikdruck beaufschlagt. Dies erfolgt im Stand der Technik durch gezielte Beeinflussung des Drehschieberventiels, welches auch bei konventionellen Lenkungen zur Verteilung des Arbeitsdrucks auf die beiden Arbeitsräume des Servomotors eingesetzt wird. Unter einer Parameterlenkung, die nicht notwendigerweise auch autonome Lenkvorgänge ausführen kann, wird eine Lenkung verstanden, bei der über ein zusätzlich aufgeprägtes Rückstellmoment die Kennlinie der Servolenkung gezielt beeinflusst wird. Diese Rückstellvorrichtungen oder Rückwirkungsvorrichtungen werden ebenfalls mit Druck beaufschlagt und bewirken eine mechanische Verringerung des Relativdrehwinkels zwischen Steuerelementen des Drehschieberventils und damit eine Verringerung der Druckbeaufschlagung des Servoantriebs für den Fahrer wird die Lenkung damit "straffer".

Im Stand der Technik gibt es entweder Parameterlenkungen, die keine aktiven Lenkvorgänge durchführen können, oder aktive Lenkungen, bei denen die Parametrisierung, also die Variation der Rückstellkraft in die Mittellage über die gleichen Rückwirkungsanordnungen vorgenommen werden, die auch für die aktiven Lenkvorgänge vorgesehen sind.

Ein Beispiel für eine Parameterlenkung im oben beschriebenen Sinne ist in der deutschen Patentschrift DE 196 164 39 C1 veröffentlicht, in der kugelförmige Rückwirkungselemente in der Steuerbuchse einer Drehschiebeanordnung in radial Richtung verschieblich gelagert sind. Diese Rückwirkungskörper werden in Abhängigkeit einer Steuerung in V-förmige Nuten des inneren Drehschieberteils gedrängt. Bei Geradeausfahrt liegen die Kugeln an beiden Flanken der V-förmigen Nuten an und bewirken somit eine Mittenzentrierung.

Drehschieberventile mit einer Eingriffsmöglichkeit für aktive Lenkvorgänge sind aus den deutschen Druckschriften DE-OS 241 2548, DE 424 24 41 C1 und DE 102 54 688 B3 bekannt.

Während bei einer Parameterlenkung ohne aktive Eingriffsmöglichkeit die Überwachung der Funktionsfähigkeit sehr einfach gehalten werden kann, weil keine für den Fahrer überraschenden Lenkvorgänge ausgelöst werden können, muss bei aktiven Lenkungen, die auch die Parametrisierung übernehmen, ein äußerst hohes Sicherheitsniveau erreicht werden, denn diese Lenkungen sind bei einer Fehlfunktion in der Lage, für den Fahrer vollkommen überraschende Lenkvorgänge auszulösen.

Aufgabe der vorliegenden Erfindung ist es deshalb eine aktive Hydrauliklenkung zu schaffen, die mit einem Überwachungsaufwand sicher betrieben werden kann, der nicht oder nur unwesentlich höher ist als derjenige einer konventionellen Parameterlenkung ohne aktive Eingriffsmöglichkeit.

Diese Aufgabe wird von einer Lenkung mit den Merkmalen des Anspruchs 1 gelöst.

Weil die Rückwirkungsanordnung eine erste Rückwirkungseinheit aufweist, die bei Beaufschlagung mit Hydraulikdruck die Steuerteile relativ zueinander in die Mittellage drängt, und weiter eine zweite Rückwirkungseinheit aufweist, die wenigstens einen ersten Eingang und wenigstens einen zweiten Eingang für ein Druckfluid aufweist, wobei bei Beaufschlagung des ersten Eingangs mit Hydraulikdruck die Steuerteile in einen ersten Drehsinn gedrängt werden und bei Beaufschlagung des zweiten Eingangs mit Hydraulikdruck die Steuerteile in einen zweiten Drehsinn gedrängt werden, können die Funktionen der beiden Rückwirkungseinheiten unabhängig voneinander aktiviert und überwacht werden. Insbesondere kann die erste Rückwirkungseinheit im normalen Fahrbetrieb aktiviert werden, während die zweite Rückwirkungseinheit nur in einem Geschwindigkeitsbereich aktiviert ist, in dem eine Fehlfunktion unkritisch wäre.

Eine besonders kompakte Ausführungsform wird möglich, wenn die erste Rückwirkungseinheit in einem Steuerteil gelagerte Rückwirkungskörper aufweist, die in v-förmige Nuten des anderen Steuerteils gedrängt werden, wobei die Rückwirkungskörper in der Mittelstellung an beiden Flanken der Nuten anliegen. Gleiches gilt, wenn die zweite Rückwirkungseinheit einen doppelt wirkenden hydraulischen Aktuator aufweist, der an beiden Steuerteilen angreift und insbesondere wenn der Aktuator eine Anzahl von Kolben/Zylindereinheiten aufweist.

Aufwändige Überwachungen der Druckverhältnisse in der zweiten Rückwirkungseinheit können entfallen, wenn die Steuerung dazu eingerichtet ist, die zweite Rückwirkungseinheit oberhalb einer bestimmten Fahrzeuggeschwindigkeit nicht anzusteuern. Dazu kann vorgesehen sein, dass die Steuerung die zweite Rückwirkungseinheit unterhalb einer bestimmten Fahrzeuggeschwindigkeit über ein den beiden Eingängen vorgeschaltetes Sicherheitsventil einschalten kann. Das Sicherheitsventil ist vorzugsweise hydraulisch in Reihe vor den beiden Eingängen angeordnet und im stromlosen Zustand geschlossen. Alternativ kann das Sicherheitsventil die beiden Eingänge hydraulisch miteinander verbinden und im stromlosen Zustand geöffnet sein.

Aktive Lenkeingriffe können beispielsweise von einer automatischen Einparkvorrichtung gesteuert werden, wenn die Steuerung dazu eingerichtet ist, im Betrieb die zweite Rückwirkungseinheit wahlweise am ersten Eingang oder am zweiten Eingang mit Druck zu beaufschlagen und dadurch einen autonomen Lenkvorgang einzuleiten.

Eine einfache Sicherheitseinrichtung sieht vor, dass bei einem autonomen Lenkvorgang ein Soll-Lenkwinkel und ein Ist-Lenkwinkel erfasst und verglichen werden und dass bei einer über einem Grenzwert liegenden Differenz der Lenkvorgang abgebrochen wird. Es kann auch ein von einem Fahrer an der Lenkhandhabe eingeleitetes Drehmoment direkt oder indirekt erfasst werden und die Steuerung soll die zweite Rückwirkungseinheit nur dann mit Druck beaufschlagen, wenn dieses Drehmoment im wesentlichen gleich Null ist. Weiter kann die Steuerung dazu eingerichtet sein, bei einem direkt oder indirekt (beispielsweise über den Druck in der Rückwirkungseinheit oder dem Servomotor) ermittelten Drehmoment an der Lenkhandhabe oberhalb eines Grenzwertes einen bereits ablaufenden autonomen Lenkvorgang abzubrechen.

Nachfolgend wird die Erfindung anhand von Ausführungsbeispielen näher beschrieben. Es zeigen:

Fig. 1:   eine erfindungsgemäße Servolenkung mit separater Anordnung von Ventilblock und elektronischer Steuereinheit;

Fig. 2:   eine erfindungsgemäße Servolenkung mit kompakter Anordnung von Ventilblock und elektronischer Steuereinheit am Lenkgetriebe;

Fig. 3:   einen Hydraulikschaltplan für eine erfindungsgemäße Servolenkung mit je einem Druckminderventil für jeden Kanal und einem Sicherheitsventil in Reihe;

Fig. 4:   einen Hydraulikschaltplan für eine erfindungsgemäße Servolenkung mit je einem Druckminderventil für jeden Kanal und einem Sicherheitsventil parallel zu dem Servomotor;

Fig. 5:   einen Hydraulikschaltplan für eine erfindungsgemäße Servolenkung mit einem Druckminderventil für die Rückwirkeinheit und einem 3/3 Wegeventil für den Servomotor sowie einem Sicherheitsventil in Reihe;

Fig. 6:   einen Hydraulikschaltplan für eine erfindungsgemäße Servolenkung mit einem Druckminderventil für alle Kanäle und 2/2 sowie 3/3 Wegeventil für die geeignete Verteilung des Hydraulikfluids;

Fig. 7:   einen Hydraulikschaltplan für eine erfindungsgemäße Servolenkung mit einem Druckminderventil für alle Kanäle und einem 3/3 Wegeventil und einem 4/3 Wegeventil mit Ruhestellung für die geeignete Verteilung des Hydraulikfluids;

Fig. 8:   einen Hydraulikschaltplan für eine erfindungsgemäße Servolenkung mit einem 3/3 Proportional-Wegeventil und einem 4/3 Proportional-Wegeventil mit Ruhestellung für die geeignete Verteilung des Hydraulikfluids;

Fig. 9:   einen Schaltplan wie in Fig. 8 mit zwei baugleichen 4/3 Proportional-Wegeventilen mit Ruhestellung für die geeignete Verteilung des Hydraulikfluids;

Fig. 10:   einen Hydraulikschaltplan für eine erfindungsgemäße Servolenkung mit je einem Druckminderventil für Rückwirkeinheit und Servomotor und einem 4/3-Proportionalwegeventile (closed center) für die geeignete Verteilung des Hydraulikfluids;

Fig. 11:   einen Schaltplan wie in Fig. 10 mit einem 4/3-Proportionalwegeventile (open center);

Fig. 12:   eine schematische Darstellung einer ersten Ausführungsform eines Aktuators für die zweite Rückwirkungseinheit;

Fig. 13:   eine schematische Darstellung einer zweiten Ausführungsform eines Aktuators für die zweite Rückwirkungseinheit;

Fig. 14:   eine Drehschieberventil mit einem Aktuator nach Fig. 12 in Querschnitten in Axial- und Radialrichtung;

Fig. 15:   eine Drehschieberventil mit einem Aktuator nach Fig. 13 in Querschnitten in Axial- und Radialrichtung; sowie

Fig. 16:   eine Ausführungsform, bei der alle Ventilfunktionen in einem 5/3-Wegeventil integriert sind.

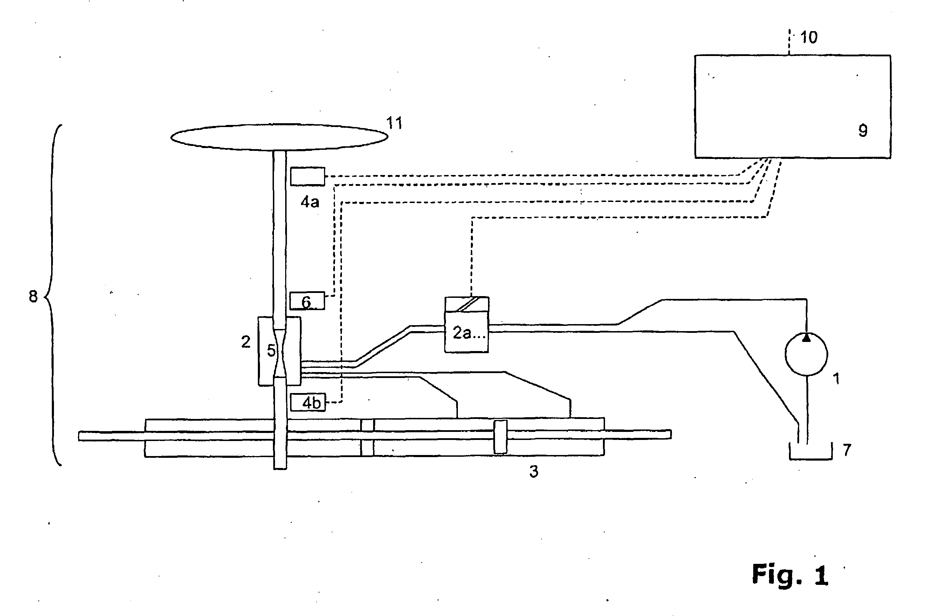

Die Figur 1 zeigt eine erfindungsgemäße Servolenkung für Kraftfahrzeuge in einer schematischen Darstellung. Eine Hydraulikpumpe 1 fördert Hydraulikflüssigkeit zu einer Ventilanordnung 2, die ein Lenkventil und eine Rückwirkungsanordnung 2a umfasst. Das Lenkventil 2 steuert nach Art einer konventionellen Hydraulikservolenkung den eingehenden Hydraulikstrom nach Bedarf in einen der beiden Arbeitsräume des hydraulischen Servomotors3, um eine Lenkhilfskraft an der Zahnstangenlenkung zu erzeugen. Ein Drehwinkelsensor 4a ist an der Längssäule im Bereich des Lenkrades 11 angeordnet. Ein weiterer Drehwinkelsensor 4b ist im Bereich des Ritzels, also im Kraftfluss der Längssäule hinter einem Drehstab 5 angeordnet. Diese beiden Drehwinkelsensoren 4a und 4b können die Relativdrehung des Lenkventils 2 in dem Drehschieber 5 detektieren. Weiter ist ein Drehmomentsensor 6 vorgesehen, der das am Lenkrad 11 eingeleitete oder anliegende Drehmoment erfassen kann.

Die Signale aus den Sensoren 4a, 4b und 6 werden in eine Steuerung 9 gespeist. Diese Steuerung erhält neben der Versorgungsspannung noch weitere Signale über eine Eingangsleitung 10. Diese Signale umfassen beispielsweise die Fahrzeuggeschwindigkeit oder die Gierwinkelgeschwindigkeit.

Druckloses Hydraulikfluid läuft über eine Rückleitung aus den beschriebenen Hydraulikkomponenten in einen Vorratsbehälter 7.

Bei dieser Ausführungsform ist das Ventil 2a in einem Abstand von dem Lenkventil 2 angeordnet.

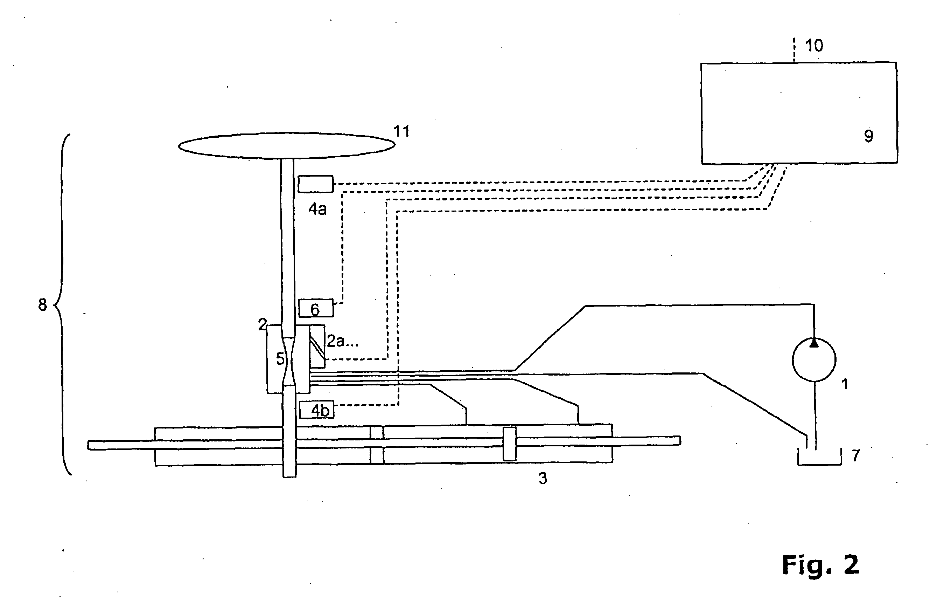

Die Figur 2 zeigt eine Lenkung entsprechend Figur 1, bei der das Ventil 2a in einer Baugruppe mit dem Lenkventil 2 zusammengefasst ist.

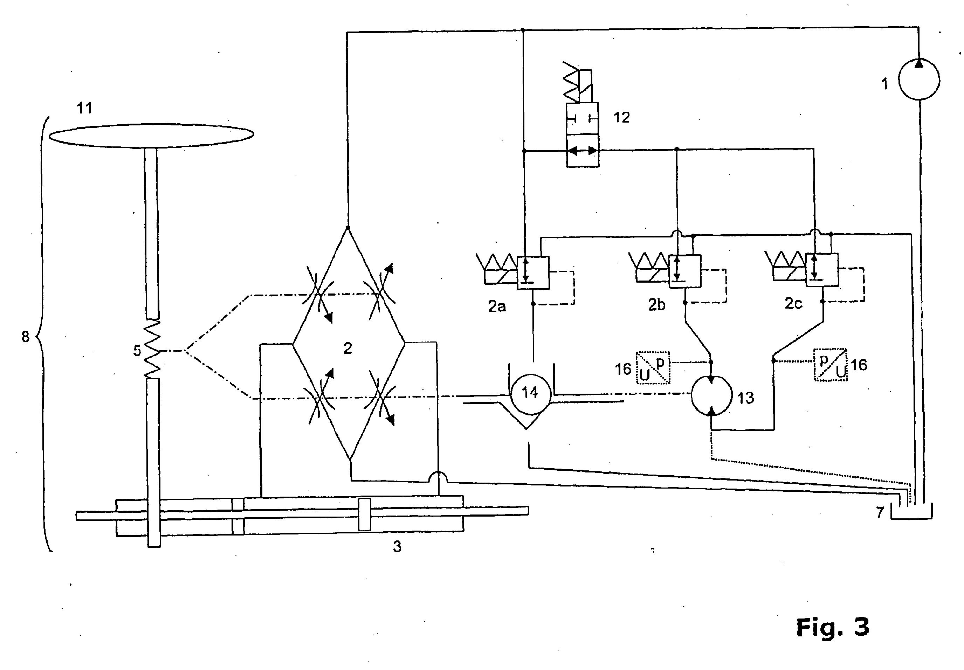

Die Figur 3 zeigt einen Schaltplan für eine erfindungsgemäße Servolenkung in einer genaueren Darstellung. Die Lenkung weist ein dem Drehstab 5 zugeordnetes Drehschieberventil 2 auf, das eine Rückwirkungsanordnung umfasst. Die Rückwirkungsanordnung wiederum weist eine erste Rückwirkungseinheit 14 auf, die zwei Steuerteile des Drehschieberventils bei Beaufschlagung mit Hydraulikdruck in Richtung der relativen Mittelstellung der beiden Steuerteile zueinander drängt. Effektiv wird hiermit eine Verringerung der Relativdrehung der Steuerteile und damit eine Verringerung des in den Servomotor 3 eingespeisten Hydraulikdrucks erzielt. Die Lenkhilfskraft wird verringert. Dadurch wird die Kennlinie der Servolenkung so verändert, dass es sich für den Fahrer straffer anfühlt. Die erste Rückwirkungseinheit 14 wird über ein Druckminderventil 2a mit Druck aus der Hydraulikpumpe 1 beaufschlagt, wobei die in Figur 3 nicht dargestellte Steuerung den Betrag des angelegten Drucks bestimmt.

Eine zweite Rückwirkungseinheit 13 ist ebenfalls dem Drehschieberventil zugeordnet und befindet sich im Kraftfluss zwischen der Eingangswelle und der Ausgangswelle des Drehschieberventils, also parallel zu der ersten Rückwirkungseinheit 14. Die zweite Rückwirkungseinheit 13 kann dabei von der Bauart sein, die in der DE-OS 2412548 oder in der DE 4242441 C1 dargestellt ist. Die zweite Rückwirkungseinheit 13 stellt einen zweiseitig wirkenden Aktuator dar, der die beiden Steuerteile des Drehschieberventiles in beide Richtungen gegeneinander verdrehen kann, also sowohl in Richtung auf die Mittelstellung als auch in die entgegengesetzte Richtung. Dieser Aktuator ist damit in der Lage, den Hydraulikstrom, der in dem Servomotor 3 geleitet wird, sowohl zu vergrößern als auch zu verkleinern.

Hierzu wird über zwei Druckminderventile 2b und 2c wiederum in Abhängigkeit von der elektronischen Steuerung 9 der Druck an den beiden Arbeitsräumen der zweiten Rückwirkungseinheit 13 eingestellt. Drucksensoren 16 überwachen die Druckverhältnisse bei einer besonders sicheren Ausführungsform. Ein Abschaltventil 12 ist druckseitig vor den beiden Druckminderventilen 2b und 2c vorgesehen. Dieses Abschaltventil 12 wird bei Ansteuerung der zweiten Rückwirkungseinheit 13 geöffnet. Im stromlosen Zustand schließt sich das Ventil 13 selbsttätig, so dass bei einem Fehler oder bei einem Stromausfall die gesamte zweite Rückwirkungseinheit 13 drucklos gestellt wird.

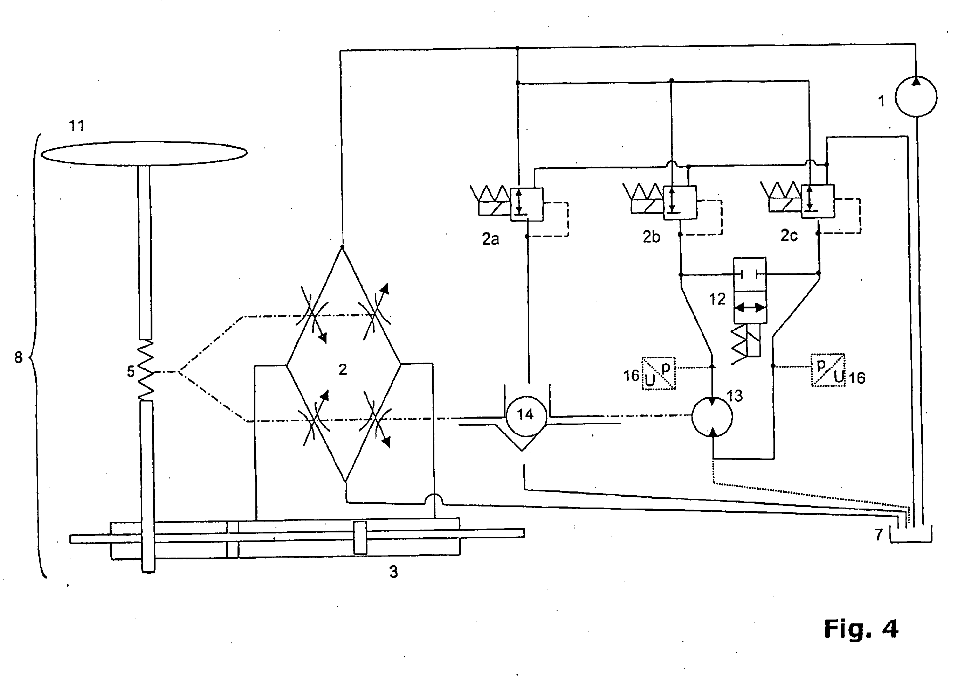

Die Figur 4 zeigt einen Schaltplan entsprechende Figur 3. In diesem Schaltbild ist das Abschaltventil 12 als Verbindung zwischen den beiden Eingängen der zweiten Rückwirkungseinheit angeordnet und im Hydraulikstrom den beiden Druckminderventilen 2b und 2c nachgeschaltet. Das Ventil 12 ist bei dieser Ausführungsform im Ruhezustand geöffnet. Soll die zweite Rückwirkungseinheit 13 betrieb gehen, so wird das Ventil 12 geschlossen. Über die Druckminderventile 2b und 2c kann dann eine Druckdifferenz zwischen den beiden Arbeitsräumen der ersten Rückwirkungseinheit 13 aufgebaut werden. Im Störungsfall oder bei einem Stormausfall öffnet sich das Ventil 12 selbsttätig, so dass jede Druckdifferenz zwischen den beiden Eingängen zu 0 wird. Die Rückwirkungseinheit 13 ist damit wirkungslos.

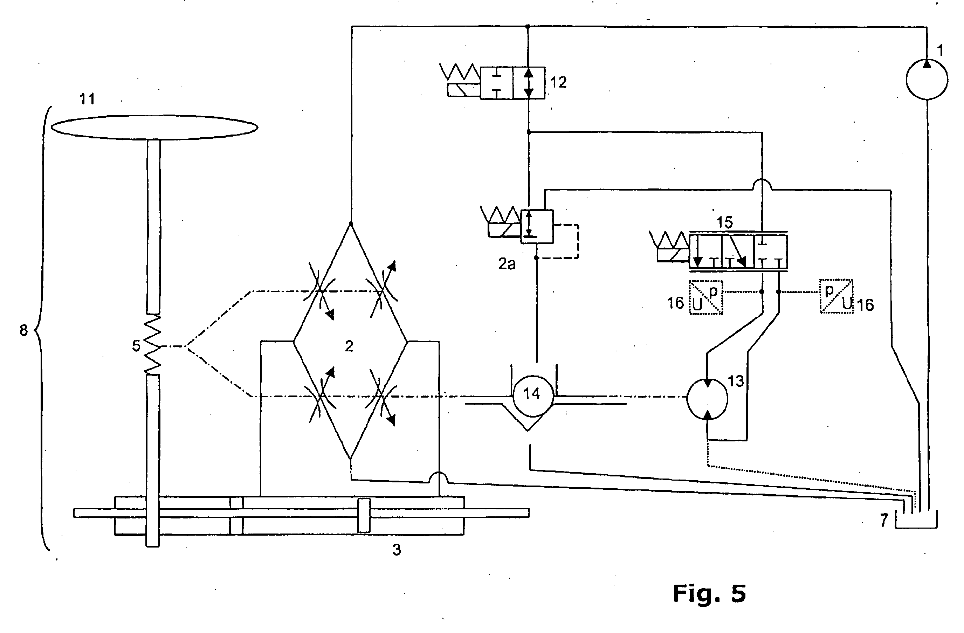

In der Figur 5 ist ein weiteres Schaltbild für eine erfindungsgemäße Hydrauliklenkung gezeigt. Während bei der Ausführung nach Figur 3 und Figur 4 beide Arbeitsräume der zweiten Rückwirkungseinheit 13 gleichzeitig mit Druck beaufschlagt werden konnten, ist hier ein 3/ 3-Wegeventil 15 zwischen der Druckseite der Hydraulikpumpe 1 und den beiden Arbeitsräumen der zweiten Rückwirkungseinheit 13 vorgesehen. Mit diesem Ventil, das auch die Funktionen eines Proportionalventils aufweisen kann, kann der eingehende Hydraulikstrom nur auf jeweils einen der beiden Arbeitsräume des Aktuators geleitet werden.

In der Figur 5 ist ein Abschaltventil 12 druckseitig sowohl vor der ersten Rückwirkungseinheit 14 als auch vor der zweiten Rückwirkungseinheit 13 vorgesehen. Es handelt sich wiederum um ein Ventil, das in der Ruhestellung geschlossen ist und damit bei einem Stromausfall die Druckzufuhr zu der Rückwirkungsanordnung insgesamt unterbricht. Bei geschlossenem Ventil 12 verhält sich die Servolenkung wie eine Lenkung, die überhaupt keine Rückwirkungsanordnung aufweist.

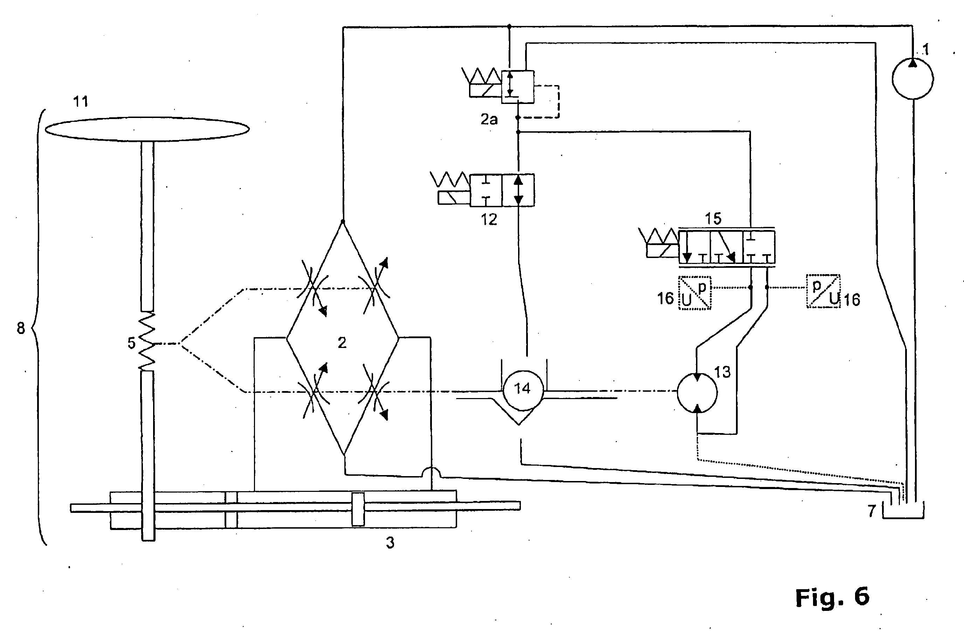

Die Figur 6 zeigt einen Schaltplan ähnlich demjenigen aus Figur 5. Wieder ist ein 3/ 3-Wegeventil vor der zweiten Rückwirkungseinheit 13 angeordnet. Das Abschaltventil 12 ist zwischen einem Druckminderventil 2a und der ersten Rückwirkungseinheit 14 angeordnet. Der Druck vor der gesamten Rückwirkungsanordnung wird über das Druckminderventil 2a geregelt oder eingestellt. Das 3/ 3-Wegeventil 15 ist so ausgebildet, dass es bei Stromausfall vollständig geschlossen ist. Auch diese Lenkung verhält sich bei einem Stromausfall wie eine konventionelle Servolenkung ohne Rückwirkungsanordnungen.

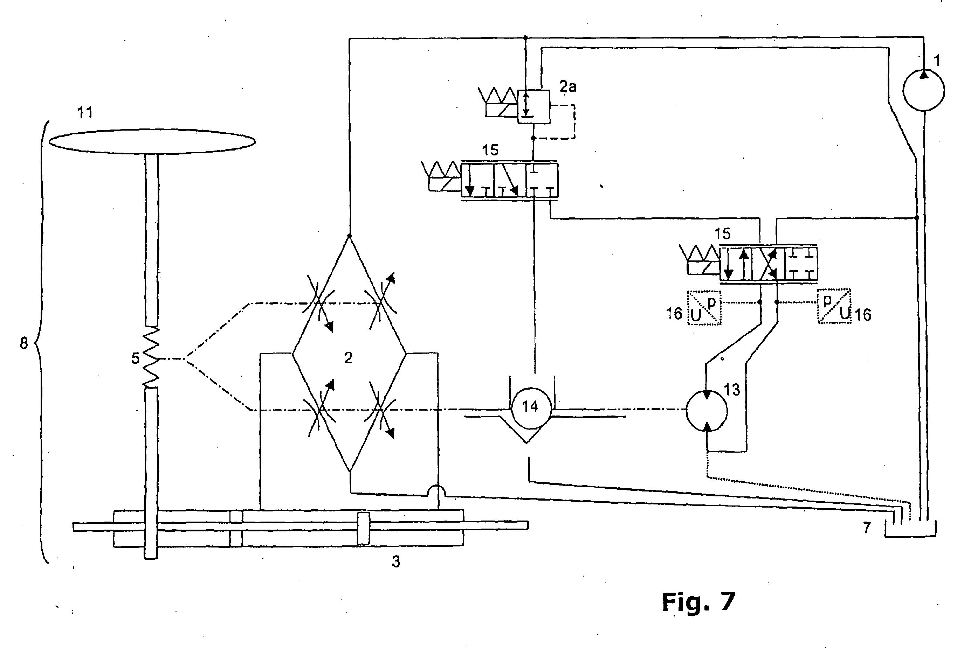

Entsprechendes gilt für die in Figur 7 dargestellte Lenkung. Hier ist das Druckminderventil 2a und das 4/3-Wegeventil 15 vor der zweiten Rückwirkungseinheit 13 wie in Figur 6 angeordnet. Ein 3/3-Wegeventil 15 verteilt hier den Hydraulikstrom proportional zwischen den beiden Rückwirkungseinheiten 13 und 14, so dass diese alternativ eingesetzt werden können.

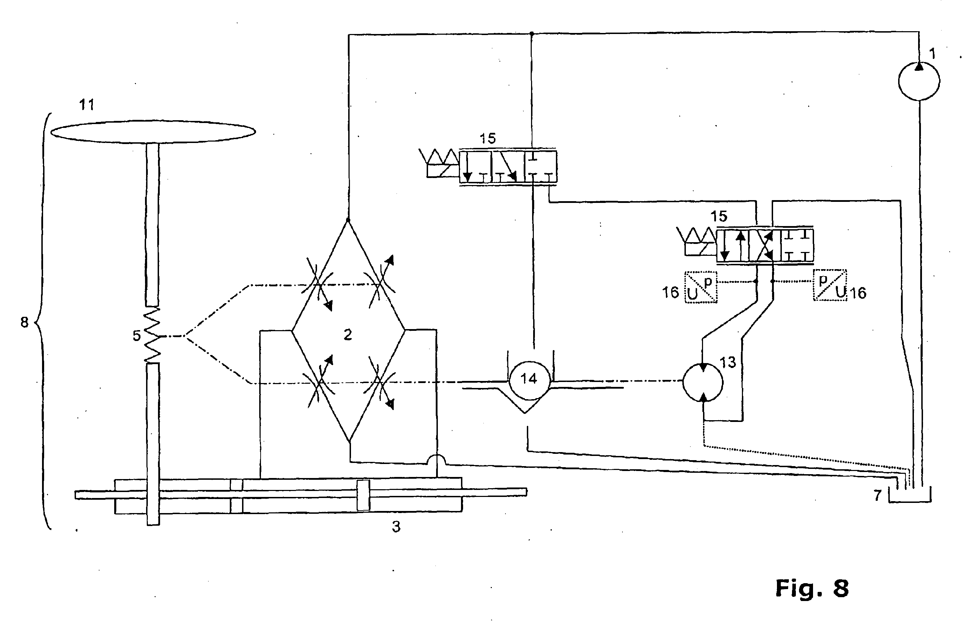

Die Figur 8 zeigt einen Hydraulikschaltplan, in dem ein 3/ 3-Wegeventil 15 für die Verteilung des eingehenden Hydraulikstroms auf die beiden Rückwirkungseinheiten 14 und 13 vorgesehen ist. Für die Aufteilung des Hydraulikstroms zwischen den beiden Arbeitsräumen der zweiten Rückwirkungseinheit 13 ist ein 4/ 3-Wegeventil 15 vorgesehen.

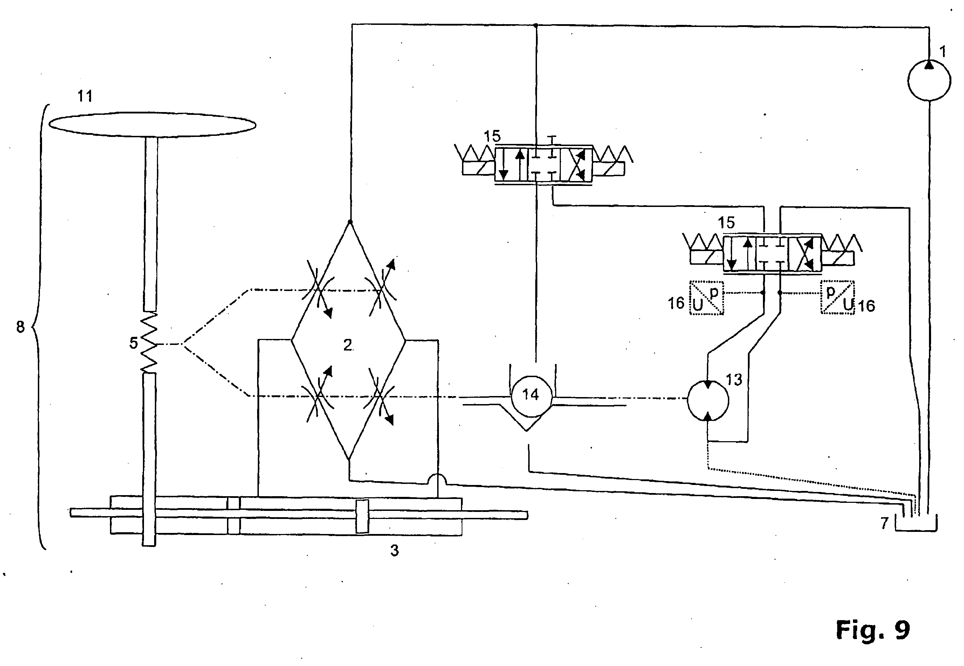

Die Figur 9 zeigt einen Hydraulikschaltplan, bei dem zwei baugleiche 4/ 3-Wegeventile 15 eingesetzt werden können. Das erste Ventil 15 ist für die Aufteilung des eingehenden Hydraulikstroms zwischen den beiden Rückwirkungseinheiten 14 und 13 eingesetzt, während das zweite Ventil 15 die Aufteilung des an der zweiten Rückwirkungseinheit 13 eingehenden Volumenstroms auf die beiden Arbeitsräume des Aktuators bewirkt.

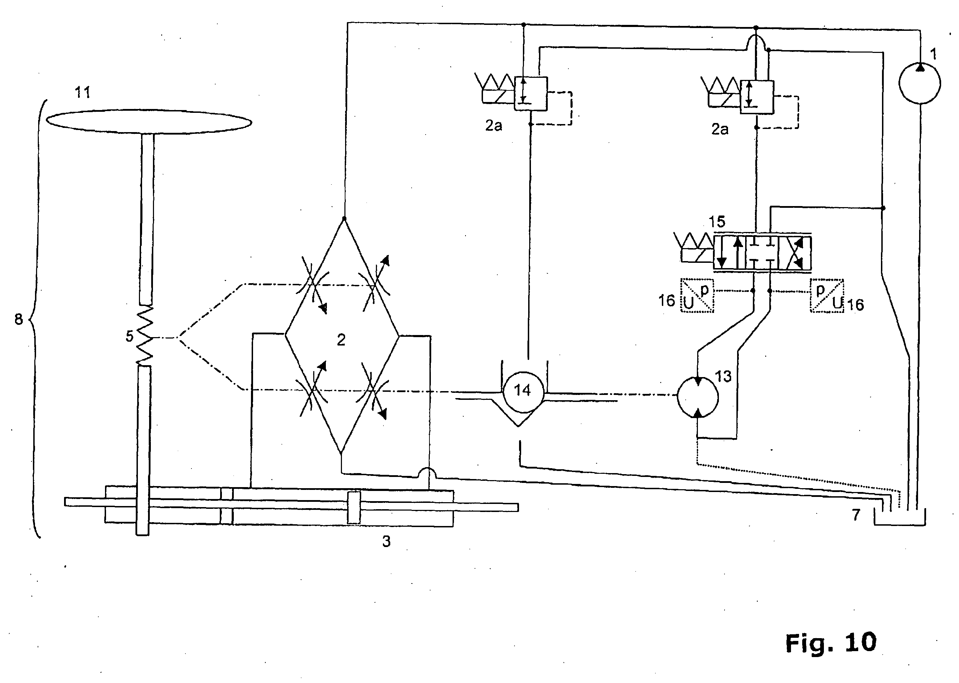

Die Figur 10 zeigt einen Schaltplan, bei dem die beiden Rückwirkungseinheiten 14 und 13 unabhängig voneinander mit Druck beaufschlagt werden können. Beide Rückwirkungseinheiten werden über baugleiche Druckminderventile 2a mit dem vorgesehenen Druck angesteuert. Die Verteilung zwischen den beiden Arbeitsräumen des Aktuators der zweiten Rückwirkungseinheit 13 wird über ein 4/ 3-Wegeventil 15 sichergestellt.

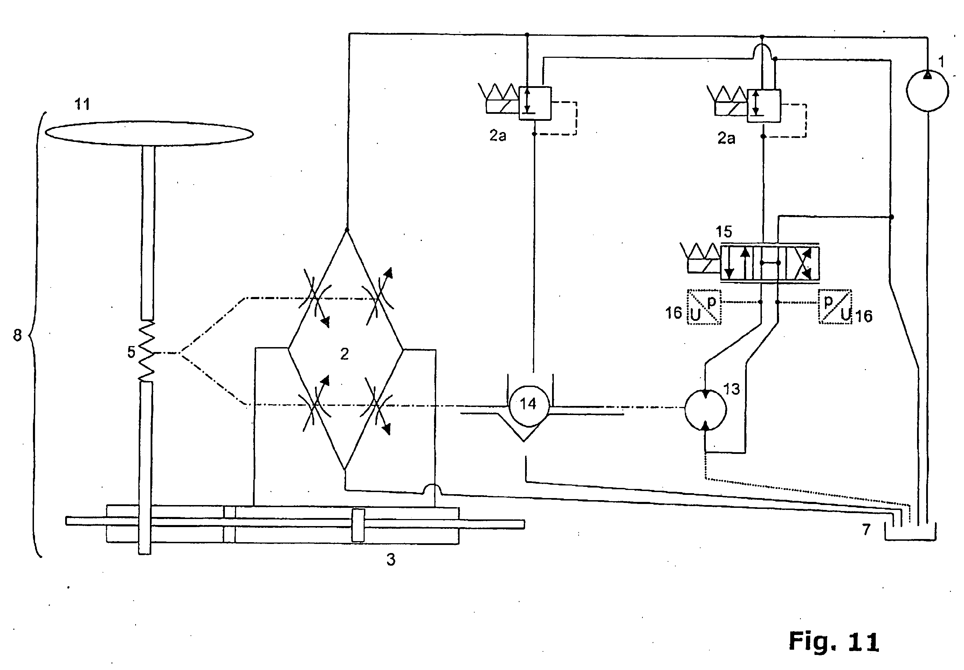

Die Figur 11 zeigt schließlich einen Schaltplan entsprechend der Figur 10, wobei das Ventil 15 ein Ventil mit offener Mitte ist, während in der Figur 10 das Ventil 15 eine geschlossene Mitte aufweist.

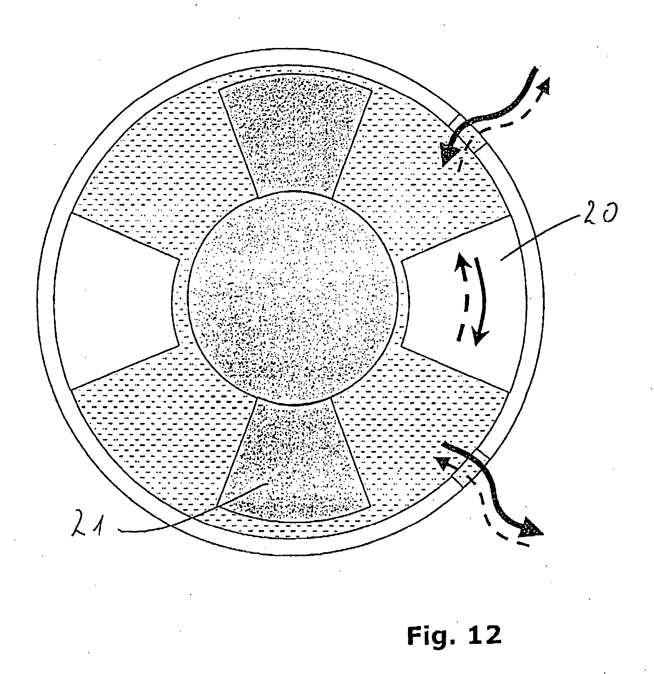

Die Figur 12 zeigt eine mögliche Bauart eines Aktuators für die zweite Rückwirkungseinheit 13. Der Aufbau entspricht demjenigen, der in der DE 4242441 C1 dargestellt ist. Der äußere Teil des Aktuators ist mit der Steuerbuchse des Drehschieberventils drehfest verbunden, während der innere Teil des Aktuators mit dem Drehschieber fest verbunden ist. Zwischen den beiden Bauelementen sind insgesamt vier Arbeitsräume gebildet, die die Anordnung zu einem doppelt wirkenden Drehflügel-Aktuator machen. Jeweils zwei diagonal gegenüberliegende Räume können hydraulisch miteinander verbunden sein. Die Druckbeaufschlagung und die Drehrichtung des äußeren Teils sind mit Pfeilen veranschaulicht.

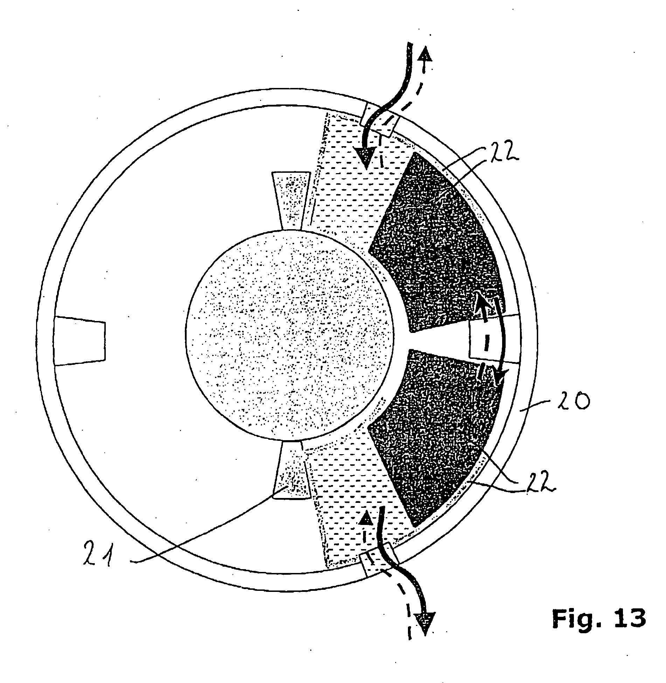

Die Figur 13 zeigt einen Aktuator ähnlich demjenigen in Figur 12. Hier wird zur Vermeidung von Abdichtungsproblemen ein speziell angepasstes Kolben-/ Zylinderpaar zwischen dem äußeren Teil und dem inneren Teil eingesetzt. Die Kolben-/Zylinderpaare bewirken bei Druckbeaufschlagung wieder eine Relativdrehung der beiden Steuerteile des Drehschieberventils zueinander, wie dies mit durchgezogenen und gestrichelten Pfeilen veranschaulicht ist.

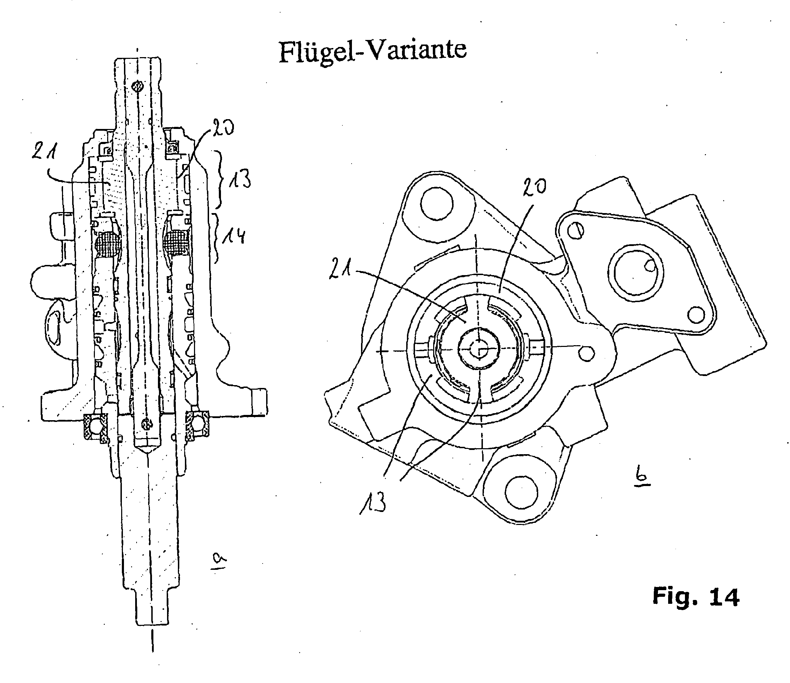

Die Figur 14 zeigt bei 14a ein Drehschieberventil mit einer Rückwirkungsanordnung, die eine erste Rückwirkungseinheit 14 und eine zweite Rückwirkungseinheit 13 umfasst. Bei 14a ist der Schnitt mittig parallel zur Dreh- und Symmetrieachse des Drehschieberventils dargestellt. Die erste Rückwirkungseinheit 14 entspricht in der Bauart derjenigen nach der die DE 196 164 39 C1, während die zweite Rückwirkungsanordnung der oben in Figur 12 beschriebenen Bauart entspricht. Die gegeneinander drehbeweglichen Teile 20 und 21 der zweiten Rückwirkungseinheit 13 sind einerseits mit der Steuerbuchse des Drehschieberventils und andererseits mit dem Drehschieber selbst einstükkig ausgebildet. Eine Druckbeaufschlagung der zweiten Rückwirkungseinheit 13 führt folglich zu einer Relativdrehung der beiden Steuerteile zueinander und damit zu einer Veränderung des in den Servomotor 3 geleiteten Hydraulikstroms.

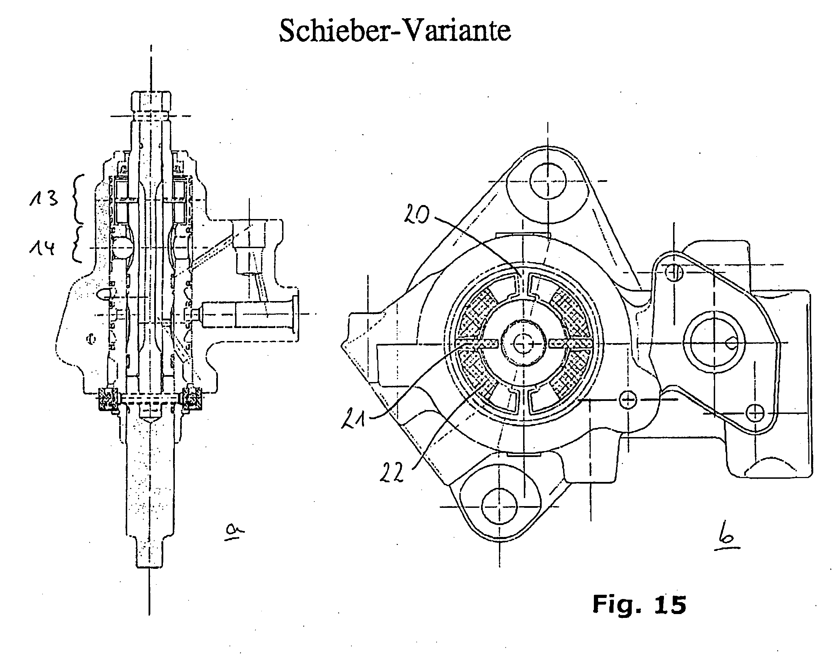

Die in Figur 13 alternativ dargestellte Ausführungsform der zweiten Rückwirkungseinheit 13 ist in der Figur 15 näher veranschaulicht. Hier ist wieder in 15a ein Querschnitt entlang der Drehachse des Drehschieberventils veranschaulicht, während in 15b ein Querschnitt in Radialrichtung durch die zweite Rückwirkungseinheit 13 abgebildet ist. Zwischen den beiden zueinander drehbeweglichen Teilen 20 und 21 sind hier die speziell geformten Kolben/Zylindereinheiten 22 angeordnet. Insbesondere im Querschnitt 15b wird deutlich, dass eine Beaufschlagung von sich diametral gegenüberliegenden Kolbenzylindereinheiten 22 eine Relativdrehung der drehbeweglichen Teile 20 und 21 erfolgt und damit wieder eine Relativdrehung der Steuerteile des Drehschieberventils erfolgt.

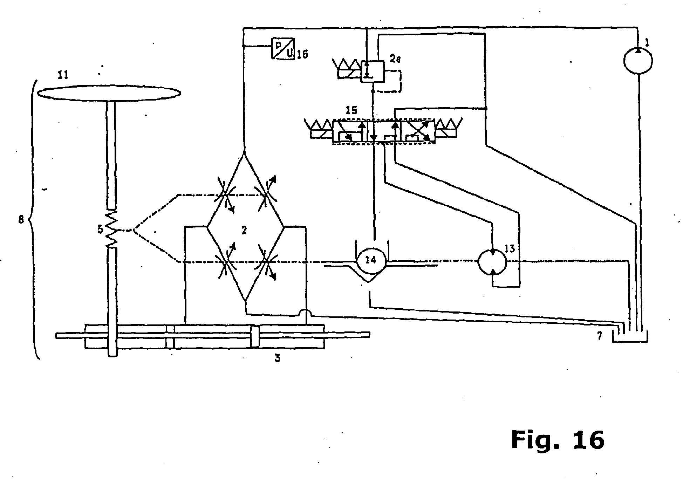

In der Figur 16 ist eine Ausführungsform dargestellt, die alle erforderlichen Funktionen in einem Ventil integriert.

Im Betrieb wird die Servolenkung zunächst mit einem Hydraulikstrom aus der Pumpe 1 beaufschlagt. Leitet der Fahrer am Lenkrad 11 ein Drehmoment ein, so werden entgegen der Federkraft des Drehstabs die Steuerteile des Drehschieberventils gegeneinander verdreht. Ein Hydraulikstrom wird dann in einen der beiden Arbeitsräume des Servomotors 3 geleitet, der daraufhin eine Lenkunterstützungskraft erzeugt. Das für die Lenkbewegung erforderliche Handmoment wird verringert. Im Stand oder bei langsamer Fahrt kann die Steuerung 9 nun die zweite Rückwirkungseinheit 13 aktivieren. Bei einer einseitigen Beaufschlagung des darin angeordneten Aktuators 20, 21 wird eine Relativdrehung zwischen den Steuerteilen erzeugt und ein geänderter Hydraulikstrom erzeugt. Die Lenkhilfskraft kann erhöht oder verringert werden.

Es kann auch ohne jegliches Drehmoment am Lenkrad eine Lenkhilfskraft erzeugt werden. Im ersten Fall greift die Steuerung in die Lenkung ein, im zweiten Fall lenkt die Lenkung selbsttätig. Bei höheren Geschwindigkeiten kann die zweite Rückwirkungseinheit komplett deaktiviert werden, beispielsweise durch stromlos machen des Ventils 12 in Fig. 2 oder Fig. 3. Wenn dieser Betriebszustand schon oberhalb von einer geringen vorgegebenen Geschwindigkeit eingenommen wird, z.B. oberhalb von 5 km/h, so kann der Überwachungsaufwand sehr gering gehalten werden, weil Fehlfunktionen unterhalb dieser Geschwindigkeit mit hoher Wahrscheinlichkeit nicht zu schwer wiegenden Folgen führen würden.

Bei höheren Geschwindigkeiten wird nur die erste Rückwirkungseinheit 14 aktiviert, so dass sich die Lenkung wie eine an sich bekannte Parameterlenkung verhält.

Insgesamt ermöglicht die so ausgestattete Lenkung autonome Lenkeingriffe wie z.B. das Einparken bei geringen Geschwindigkeiten und ein hohes Sicherheitsniveau auch bei geringem Überwachungsaufwand.

Die Rückwirkungsanordnung mit den beiden koaxial hintereinander angeordneten Rückwirkungseinheiten 13 und 14 baut dabei in Axialrichtung noch sehr kurz.

Es ergeben sich weiter folgende besondere Merkmale und Vorteile:

Zur Lösung der Aufgabe wird daher eine Lenkung nach Stand der Technik erweitert um einen zwischen Lenksäule (Eingangswelle) und Ritzelwelle (bzgl. Kraftfluss also parallel zur Rückwirkungsanordnung sowie Lenkventil mit Drehstab) angeordneten Hydraulikmotor. Dieser kann auch als Kunststoffelement ausgeführt sein, da die auftretenden Momente gering sind.

Als Variante kann der Hydraulikmotor durch eingelegte speziell geformte Paare von Zylindern und Kolben realisiert werden, mit vorteilen für Herstellbarkeit, Dichtheit und Kosten.

Die Drücke im Lenkzylinder und damit die Zahnstangenkraft ergeben sich aus dem Verdrehwinkel des Lenkventils, also aus der Momentenbilanz an Lenkventil und Drehstab:

$$Verdrehwinkel \times Drehstabsteifigkeit = \Sigma \; (Lenkradmoment, \; Ritzelmoment, \; Rückwirkmoment(Kugelreihe), \; Moment(Hydraulikmotor))$$

[Reibmomente u.ä. hier vernachlässigt]

Die vorgeschlagene Lösung ist sowohl für Lenkgetriebe mit "Open Center"-, als auch für solche mit "Closed Center"-Lenkventil, sowie für Druckregel-, Druckminder- und Proportional-(strom-)ventile anwendbar.

Bei Abschaltung der "aktiven" Komponenten ist der Parameterzweig (erste Rückwirkungseinheit 14) voll funktionsfähig wie die in der Praxis erprobte Parameterlenkung.

Bei Komplettabschaltung des Systems bzw. Stromausfall ergibt sich die Kennlinie des Lenksystems auf der sog. "Schnellfahrkennlinie", also der Einstellung mit höherem Lenkmoment angemessen für das Fahren bei hohen Geschwindigkeiten, weil der volle Druck an der ersten Rückwirkungseinheit anliegt, denn die dafür vorgesehenen sind im Ruhezustand geöffnet.

Demgegenüber ist beim Stand der Technik eine getrennte Abschaltung der aktiven Funktionalität nicht möglich. Bei Komplettabschaltung des Systems bzw. Stromausfall ergibt sich die Kennlinie des Lenksystems auf der sog. "Parkierkennlinie", also der Einstellung mit geringem Lenkmoment angemessen für das Fahren und Rangieren bei sehr geringen Geschwindigkeiten, denn die Rückwirkungseinheiten werden drucklos.

Bei Verzicht auf aktive Funktionen für Einsatz bei höheren Geschwindigkeiten (z.B. aktive Rückstellung, Geradeauslaufkorrektur) unter Beibehaltung der Möglichkeit zum aktiven Lenkeingriff beim Rangieren ist es möglich, auf Druck- oder Momentensensoren zur Überwachung des Systems zu verzichten und ein Fehlverhalten des Systems (z.B. Ventilklemmen) allein über Fehlererkennungsverfahren aus Sollvorgabe und Istgröße (Lenkwinkel) zu erkennen, z.B. bei Überschreiten einer zulässigen Regelabweichung eines Lenkwinkelreglers.

Bei solcher Auslegung lässt sich zwar ein Fehlverhalten von Stellelementen nicht von einem manuellen Eingriff des Fahrers unterscheiden, doch da in diesem Fall ein Abschalten des aktiven Systems ebenso erwünscht ist (der Fahrer erhält die Kontrolle zurück), ist dies auch nicht notwendig.

Geht man weiter davon aus, dass ein Fehlverhalten der Stellelemente nur dann erfolgen kann, wenn diese in Betrieb sind - z.B. also nur beim Rangieren - kann sogar auf zusätzliche Maßnahmen zur redundanten hydraulischen Abschaltung verzichtet werden, weil ein solches Fehlverhalten für den Fahrer bei geringer Geschwindigkeit sicher beherrschbar ist und außerdem so deutlich erkennbar ist, dass ein Fahrer den niedrigen Geschwindigkeitsbereich in diesem Fall nicht mehr verlassen wird.

Die vorgeschlagene Lösung erfordert nicht nur weniger Bauraum, sondern ermöglicht auch geringere Kosten bei geringerer Komplexität (weniger Bauteile), was auch eine höhere Zuverlässigkeit beinhaltet.

**Bezugszeichenliste**

1. Pumpe

2. Lenkventil (Open oder Closed Center); 2a,2b, 2c Druckregel-, Druckminder- oder Proportional-/Servoventil

3. Lenkzylinder

4. (4a, 4b) Drehwinkelsensor

5. Drehstab

6. Drehmomentsensor

7. Tank/Vorratsbehälter

8. Lenkgetriebe

9. Elektronisches Steuergerät

10. Signale vom/zum Fahrzeug, z.B. Fahrzeuggeschwindigkeit, Lenk(rad)winkel

11. Lenkhandhabe

12. Schaltventil

13. Hydraulikmotor (Rückwirkungsanordnung)

14. Rückwirkungsanordnung

15. Wegeventil, Verteilung

**Patentansprüche**

1. Hydraulische Servolenkung für Kraftfahrzeuge mit

  - einer Lenkhandhabe (11),
  - einem mit der Lenkhandhabe verbundenen Servoventil (2), welches in Form einer Drehschieberanordnung ausgebildet ist, dessen relativ zueinander drehbewegliche Steuerteile miteinander durch eine Federung verbunden sind, die die Steuerteile relativ zueinander in eine Mittellage zu stellen sucht,
  - einer Rückwirkungsanordnung (13,14), die Einfluss auf die Relativdrehung zwischen den Steuertellen hat,
  - einer elektronischen Steuerung (9), die dazu eingerichtet ist, fahrzustandsabhängige Werte und/oder Druckwerte der Hydraulik als Eingangssignale (10) zu verarbeiten und Ventile (2a-c,12,15) zur Beaufschlagung der Rückwirkungsanordnung anzusteuern,

  **dadurch gekennzeichnet, dass** die Rückwirkungsanordnung folgendes aufweist:

  - eine erste Rückwirkungseinheit (14), die bei Beaufschlagung mit Hydraulikdruck die Steuerteile in die Mittellage drängt,
  - eine zweite Rückwirkungseinheit (13), die wenigstens einen ersten Eingang und wenigstens einen zweiten Eingang für ein Druckfluid aufweist, wobei bei Beaufschlagung des ersten Eingangs mit Hydraulikdruck die Steuerteile in einen ersten Drehsinn gedrängt werden und bei Beaufschlagung des zweiten Eingangs mit Hydraulikdruck die Steuerteile in einen zweiten Drehsinn gedrängt werden.

2. Servolenkung nach Anspruch 1, **dadurch gekennzeichnet, dass** die erste Rückwirkungseinheit (14) in einem Steuerteil gelagerte Rückwirkungskörper aufweist, die in v-förmige Nuten des anderen Steuerteils gedrängt werden, wobei die Rückwirkungskörper in der Mittelstellung an beiden Flanken der Nuten anliegen.

**3.** Servolenkung nach einem der vorhergehenden Ansprüche, **dadurch gekennzeichnet, dass** die zweite Rückwirkungseinheit (13) einen doppelt wirkenden hydraulischen Aktuator aufweist, der an beiden Steuerteilen angreift.

**4.** Servolenkung nach Anspruch 3, **dadurch gekennzeichnet, dass** der Aktuator eine Anzahl von Kolben/Zylindereinheiten (22) aufweist.

**5.** Servolenkung nach einem der vorhergehenden Ansprüche, **dadurch gekennzeichnet, dass** die Steuerung (9) dazu eingerichtet ist, die zweite Rückwirkungseinheit (13) oberhalb einer bestimmten Fahrzeuggeschwindigkeit nicht anzusteuern.

**6.** Servolenkung nach einem der vorhergehenden Ansprüche, **dadurch gekennzeichnet, dass** die Steuerung (9) dazu eingerichtet ist, die erste Rückwirkungseinheit (14) unterhalb einer bestimmten Fahrzeuggeschwindigkeit nicht anzusteuern.

**7.** Servolenkung nach einem der vorhergehenden Ansprüche, **dadurch gekennzeichnet, dass** die Steuerung dazu eingerichtet ist, entweder die erste Rückwirkungseinheit (14) oder die zweite Rückwirkungseinheit (13) einzuschalten, nicht aber beide Einheiten gleichzeitig.

**8.** Servolenkung nach einem der vorhergehenden Ansprüche, **dadurch gekennzeichnet, dass** ein Sicherheitsventil die beiden Eingänge hydraulisch miteinander verbinden und im stromlosen Zustand geöffnet sein kann.

**9.** Servolenkung nach einem der vorhergehenden Ansprüche, **dadurch gekennzeichnet, dass** ein Sicherheitsventil hydraulisch parallel zu den beiden Eingängen angeordnet ist und im stromlosen Zustand geöffnet ist.

**10.** Servolenkung nach einem der vorhergehenden Ansprüche, **dadurch gekennzeichnet, dass** die Steuerung (9) dazu eingerichtet ist, im Betrieb die zweite Rückwirkungseinheit (13) wahlweise am ersten Eingang oder am zweiten Eingang mit Druck zu beaufschlagen und **dadurch** einen autonomen Lenkvorgang einzuleiten.

**11.** Servolenkung nach einem der vorhergehenden Ansprüche, **dadurch gekennzeichnet, dass** bei einem autonomen Lenkvorgang ein Soll-Lenkwinkel und ein Ist-Lenkwinkel erfasst und verglichen werden und dass bei einer über einem Grenzwert liegenden Differenz der Lenkvorgang abgebrochen wird.

**12.** Servolenkung nach einem der vorhergehenden Ansprüche, **dadurch gekennzeichnet, dass** ein von einem Fahrer an der Lenkhandhabe (11) eingeleitetes Drehmoment direkt oder indirekt erfasst wird und dass die Steuerung (9) die zweite Rückwirkungseinhert (13) nur dann mit Druck beaufschlagen kann, wenn dieses Drehmoment im wesentlichen gleich Null ist.

**13.** Servolenkung nach einem der vorhergehenden Ansprüche, **dadurch gekennzeichnet, dass** die Steuerung (9) dazu eingerichtet ist, bei einem nach Betrag und/oder Richtung ermittelten Drehmoment an der Lenkhandhabe (11) oberhalb eines Grenzwertes einen bereits ablaufenden autonomen Lenkvorgang abzubrechen.

**Claims**

**1.** Hydraulic power steering system for motor vehicles with a

    - Steering handle (11)
    - A servo-valve (2) connected to the steering handle, which is designed in the form of a rotary valve arrangement, of which the control parts which rotate relative to one another are connected to one another by a spring element, which seeks to position the control parts in a middle position relative to one another,
    - A reaction arrangement, (13, 14), which exerts an influence on the relative rotation between the control parts,
    - An electronic control element (9), which is designed to process driving condition dependent values and/or pressure values of the hydraulics as input signals (10) and to actuate valves (2a-c, 12, 155) to apply pressure on the reaction arrangement,

**characterised in that** the reaction arrangement has the following:

- A first reaction unit (14), which, on applying hydraulic pressure, forces the control parts into the middle position,
- A second reaction unit (13), which has at least one first inlet and at least one second inlet for a pressure fluid, wherein, on applying hydraulic pressure at the first inlet, the control parts are forced into a first direction of rotation, and on applying hydraulic pressure at the second inlet, the control parts are forced into a second direction of rotation.

2. Power steering system according to Claim 1, **characterised in that** the first reaction unit (14) has reaction bodies mounted in a control part, which are forced into V-shaped grooves in the other control part, wherein the reaction bodies in the middle position are in contact at both flanks of the grooves.

3. Power steering system according to any one of the preceding claims, **characterised in that** the second reaction unit (13) has a double-action hydraulic actuator, which engages at both control parts.

4. Power steering system according to Claim 3, **characterised in that** the actuator has a number of pistons/cylinder units (22).

5. Power steering system according to any one of the preceding claims, **characterised in that** the control element (9) is deigned not to actuate the second reaction unit (13) above a specific vehicle speed.

6. Power steering system according to any one of the preceding claims, **characterised in that** the control element (9) is designed not to actuate the first reaction unit (14) above a specific vehicle speed.

7. Power steering system according to any one of the preceding claims, **characterised in that** the control element is designed to switch on either the first reaction unit (14) or the second reaction unit (13), but not both units simultaneously.

8. Power steering system according to any one of the preceding claims, **characterised in that** a safety valve connects the two inlets to one another hydraulically and can be opened in the de-energized state.

9. Power steering system according to any one of the preceding claims, **characterised in that** a safety valve is arranged hydraulically parallel to the two inlets and can be opened in the de-energized state.

10. Power steering system according to any one of the preceding claims, **characterised in that** the control element (9) in addition is designed, when in operation, to apply pressure to the second reaction unit (13) optionally at the first inlet or at the second inlet, and thereby to initiate an autonomous steering process.

11. Power steering system according to any one of the preceding claims, **characterised in that**, with an autonomous steering process, a desired steering angle and an actual steering angle are recorded and compared, and **in that** if the difference is above a limit value the steering process is interrupted.

12. Power steering system according to any one of the preceding claims, **characterised in that** a torque initiated by a driver at the steering handle (11) is acquired directly or indirectly, and **in that** the control element (9) can only apply pressure to the second reaction unit (13) when this torque is essentially equal to zero.

13. Power steering system according to any one of the preceding claims, **characterised in that** the control element (9) is designed, for a torque value determined according to amount and/or direction, above a limit value, to interrupt an already initiated autonomous steering process at the steering handle (11).

**Revendications**

1. Direction assistée hydraulique pour des véhicules automobiles, comportant

- un volant de direction (11),
- une servosoupape (2), qui est reliée au volant de direction et qui est réalisée sous la forme d'un dispositif à tiroir rotatif, dont les éléments de commande, mobiles en rotation les uns par rapport aux autres, sont reliés entre eux par un système de ressort qui tente de maintenir les éléments de commande dans une position médiane les uns par rapport aux autres,
- un dispositif de rétroaction (13, 14), qui influe sur la rotation relative entre les éléments de commande,
- une commande électronique (9) qui est configurée pour traiter en tant que signaux d'entrée (10) des valeurs fonction de l'état de conduite et/ou des valeurs de pression du système hydraulique, et pour activer des soupapes (2a-c, 12, 15) destinées à solliciter le dispositif de rétroaction.

**caractérisée en ce que** le dispositif de rétroaction comporte les éléments suivants :

- une première unité de rétroaction (14) qui, sous l'effet d'une sollicitation par une pression hydraulique, pousse les éléments de commande dans la position médiane,
- une deuxième unité de rétroaction (13), qui comporte au moins une première entrée et au moins une deuxième entrée pour un fluide sous pression, sachant que sous l'effet de l'admission de la pression hydraulique par la première entrée, les éléments de commande sont poussés dans un premier sens de rotation et sous l'effet de l'admission de la pression hydraulique par la deuxième entrée, les éléments de commande sont poussés dans un deuxième sens de rotation.

2. Direction assistée selon la revendication 1, **caractérisée en ce que** la première unité de rétroaction (14) comporte des corps de rétroaction montés dans un élément de commande, lesquels sont poussés dans des rainures en forme de V de l'autre élément de commande, lesdits corps de rétroaction dans la position médiane étant en appui contre les deux flancs des rainures.

3. Direction assistée selon l'une quelconque des revendications précédentes, **caractérisée en ce que** la deuxième unité de rétroaction (13) comporte un actionneur hydraulique à double effet, qui entre en contact avec les deux éléments de commande.

4. Direction assistée selon la revendication 3, **caractérisée en ce que** l'actionneur comporte un nombre donné d'unités à piston et cylindre (22).

5. Direction assistée selon l'une quelconque des revendications précédentes, **caractérisée en ce que** la commande (9) est configurée pour ne pas activer la deuxième unité de rétroaction (13) lorsque la vitesse du véhicule est supérieure à une vitesse déterminée.

6. Direction assistée selon l'une quelconque des revendications précédentes, **caractérisée en ce que** la commande (9) est configurée pour ne pas activer la première unité de rétroaction (14) lorsque la vitesse du véhicule est inférieure à une vitesse déterminée.

7. Direction assistée selon l'une quelconque des revendications précédentes, **caractérisée en ce que** la commande est configurée pour activer soit la première unité de rétroaction (14), soit la deuxième unité de rétroaction (13), mais pas les deux unités simultanément.

8. Direction assistée selon l'une quelconque des revendications précédentes, **caractérisée en ce qu'**une soupape de sécurité peut relier hydrauliquement les deux entrées entre elles et peut être ouverte à l'état non alimenté en courant.

9. Direction assistée selon l'une quelconque des revendications précédentes, **caractérisée en ce qu'**une soupape de sécurité est disposée hydrauliquement parallèlement aux deux entrées et est ouverte à l'état non alimenté en courant.

10. Direction assistée selon l'une quelconque des revendications précédentes, **caractérisée en ce que** la commande (9) est configurée pour, en cours de service, solliciter en pression la deuxième unité de rétroaction (13) au choix au niveau de la première entrée ou au niveau de la deuxième entrée et, de ce fait, pour introduire un processus de direction autonome.

11. Direction assistée selon l'une quelconque des revendications précédentes, **caractérisée en ce que**, en présence d'un processus de direction autonome, un angle de direction théorique et un angle de direction réel sont enregistrés et comparés, et **en ce que**, le processus de direction est interrompu lorsque la différence entre les deux valeurs est supérieure à une valeur limite.

**12.** Direction assistée selon l'une quelconque des revendications précédentes, **caractérisée en ce qu'**un couple de rotation, introduit par le conducteur sur le volant de direction (11), est détecté directement ou indirectement, et **en ce que** la commande (9) ne peut solliciter en pression la deuxième unité de rétroaction (13) que lorsque ce couple de rotation est sensiblement égal à zéro.

**13.** Direction assistée selon l'une quelconque des revendications précédentes, **caractérisée en ce que** la commande (9) est configurée pour interrompre un processus de direction autonome déjà en cours lorsqu'un couple de rotation sur le volant de direction (11), déterminé selon la valeur et/ou la direction, est supérieur à une valeur limite.

Fig. 1

Fig. 2

**Fig. 3**

1  2  2a  2b  2c  3  5  7  8  11  12  13  14  16  P/U  U/P

14

Fig. 4

Fig. 5

EP 1 695 892 B1

**Fig. 6**

EP 1 695 892 B1

Fig. 7

Fig. 8

EP 1 695 892 B1

Fig. 9

Fig. 10

EP 1 695 892 B1

Fig. 11

EP 1 695 892 B1

Fig. 12

**Fig. 13**

Flügel-Variante

Fig. 14

Schieber-Variante

Fig. 15

**Fig. 16**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19616439 C1
- DE 2412548 A
- DE 4242441 C1
- DE 10254688 B3